# EUROPÄISCHE PATENTSCHRIFT

(11) **EP 0 912 006 B1**
(45) Veröffentlichungstag und Bekanntmachung des Hinweises auf die Patenterteilung: **14.02.2007**
(21) Anmeldenummer: 98203534.7
(22) Anmeldetag: 20.10.1998
(51) Int. Cl.: G06F 1/04, H04J 3/06, H04M 1/73, H04Q 7/32

(54) **Mobilfunkgerät mit einem Steuersignalgenerator**
Radioapparatus with a control signal generator
Radiotéléphone avec générateur de signaux de controle

(30) Priorität: 25.10.1997 DE 19747275
(43) Veröffentlichungstag der Anmeldung: 28.04.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Bauer, Harald, Dipl.-Ing., Röntgenstrasse 24, 22335 Hamburg (DE); Kempf, Peter, Dr.-Ing., Röntgenstrasse 24, 22335 Hamburg (DE); Bening, Andreas, Dipl.-Ing., Röntgenstrasse 24, 22335 Hamburg (DE)
(74) Vertreter: Volmer, Georg

(56) Entgegenhaltungen:
- EP-A- 0 343 528
- EP-A- 0 401 763
- EP-A- 0 449 369
- WO-A-92/20027

## Beschreibung

Die Erfindung bezieht sich auf ein Mobilfunkgerät mit mehreren, durch Steuersignale schaltbaren Baugruppen, mit wenigstens einem über Steuerleitungen gekoppelten Steuersignalgenerator und mit wenigstens einem Speicher zur Speicherung von wenigstens einem Datenwort für ein Steuersignal.

Des weiteren betrifft die Erfindung noch einen Steuersignalgenerator zur Schaltung wenigstens einer über eine Steuerleitung gekoppelten Baugruppe mittels eines Steuersignals mit wenigstens einem Speicher zur Speicherung von wenigstens einem Datenwort für ein Steuersignal, sowie ein digitales Übertragungssystem mit einem solchen Steuersignalgenerator.

Aus EP 0 401 763 ist ein System zur Erzeugung von Steuersignalen bekannt, bei dem eine Mehrzahl von Steuersignalen und viele Signalwechsel generiert werden können, die zur Steuerung eines digitalen Mobilfunkgerätes in einem TDMA-System benötigt werden. Dabei werden die Steuersignale durch das sukzessive Abarbeiten von Befehlen, die in einem Befehlsspeicher (101) abgelegt sind, verändert. Wie in der Figur 6 und der zugehörigen Beschreibung (Seite 4, Zeile 3-19) dargestellt ist, wird eine Änderung eines Steuersignals auf einer Steuerleitung vorzugsweise durch eine relative Zeitangabe festgelegt, die den Abstand zur jeweils vorhergehenden Änderung unabhängig von der zugeordneten Steuerleitung definiert. Für den Fall, daß ein bestimmter Zeitpunkt nur durch eine absolute Zeitangabe (At1) für den Abstand zu einem Nullpunkt des Systemtaktes (Seite 4, Zeile 9-12) definiert werden kann, wird für eine Änderung eines Steuersignals zu diesem Zeitpunkt ein Startregister (107) verwendet. Das Startregister enthält mehrere Datenworte mit jeweils zwei Bereichen, in denen zum einen die absolute Zeitangabe (time section 108) und zum anderen die Adresse (address section 109) des der Änderung zugeordneten Befehls im Befehlsspeicher abgespeichert sind (s. Figur 9). Für die übrigen Änderungen der Steuersignale wird ein Arbeitsregister (114) verwendet, das ähnlich aufgebaut ist. Anhand des Inhalts von Start- bzw. Arbeitsregister wird zu dem vorgegebenen Zeitpunkt der an der vorgegebenen Adresse abgelegte Befehl aufgerufen und an die Steuerleitungen (terminals A,B,C,D,...) gelegt. Die Befehle im Befehlsspeicher sind in wenigstens vier Bereiche gegliedert. In einem ersten Bereich (terminal assigning section 71) ist ein Datenwort abgespeichert, das die Steuerleitung (z. B. terminal A) kennzeichnet, auf der das jeweilige Steuersignal (z. B. timing signal 601) ausgegeben werden soll. Im zweiten Bereich (terminal operation assigning section 72) wird die für die betroffene Steuerleitung auszuführende Operation (d.h. die Änderung eines Steuersignals) festgelegt (603). Mit der Bedingungsabfrage im dritten Bereich (condition section 74) kann definiert werden, ob eine externe Bedingung zur Ausführung des Befehls abgefragt bzw. berücksichtigt werden soll. Der vierte Bereich (waiting time assigning section 73) gibt einen Wert für die Zeit (Mt1) an, die bis zur Ausführung des nächsten Befehls (82) gewartet werden soll. Dieser Wert wird an den entsprechenden Bereich (waiting time section 113) im Arbeitsregister übertragen, während die Adresse für den nächsten Befehl inkrementiert wird. Bei einem Steuersignalgenerator nach dem Stand der Technik kann zu einem bestimmten Zeitpunkt somit nur jeweils ein Steuersignal für eine bestimmte Steuerleitung geändert werden. Insbesondere in Systemen mit mehreren Baugruppen mit jeweils unterschiedlichen Steuersignalen, wie beispielsweise in einem Mobilfunkgerät für ein digitales Übertragungssystem mit einem TDMA-Verfahren, kann eine schnellere Steuerung der Steuersignale erforderlich sein.

Die Aufgabe der Erfindung ist daher, ein Mobilfunkgerät mit einem Steuersignalgenerator zu schaffen, der eine Änderung von mehreren Steuersignalen möglichst schnell und flexibel ermöglicht.

Die Aufgabe wird dadurch gelöst, daß jeder Speicher zur Lieferung von Datenworten vorgesehen ist, wobei jedes Datenwort jeweils Steuersignale für wenigstens zwei mit dem Steuersignalgenerator gekoppelte Steuerleitungen enthält. Erfindungsgemäß sind in jedem Datenwort, das vom Speicher geliefert wird, wenigstens zwei Steuersignale in codierter Form enthalten. Bei jeder Lieferung eines Datenwortes durch den Speicher können so wenigstens zwei neue Steuersignale an die Steuerleitungen weitergegeben werden. Dadurch können mehrere Steuersignale gleichzeitig und flexibel, da beliebige Datenworte im Speicher gespeichert werden können, geändert werden. Am vorteilhaftesten sind Datenworte, die Steuersignale (beispielsweise in einem Hexadezimalcode) für alle mit dem Steuersignalgenerator gekoppelte Steuerleitungen enthalten. Dann können mit jedem Datenwort alle Steuersignale geändert werden, so daß es zu keinen Problemen durch mehrere angeforderte Steuersignaländerungen innerhalb eines kurzen zeitlichen Abstandes oder zum gleichen Zeitpunkt kommt. Dies gilt insbesondere für Mobilfunkgeräte, bei denen mehrere Baugruppen durch solche Steuersignale gesteuert werden (z.B. Ein-/Ausschalten von Stromsparmodes). Wenn ein Teil der Steuersignale nicht geändert wird, enthält das zugehörige Datenwort für diese bestimmten Steuerleitungen jeweils das bisherige Steuersignal. Um keine Änderung eines Steuersignals vorzunehmen, muß das gleiche Datenwort geliefert werden. Die Steuerung kann durch einfache Änderungen des Speicherinhaltes Veränderungen angepaßt werden. Insbesondere kann der Speicher in einem digitalen Signalprozessor (DSP) realisiert werden, bzw. der bereits vorhandene Speicherbereich eines DSP ausgenutzt werden. Die Lieferung der Datenworte an den Steuersignalgenerator kann vorteilhafterweise vom Prozessorkern des DSP mittels einer DSP-Interrupt-Routine gesteuert werden.

In einer bevorzugten Ausführung der Erfindung ist der Speicher periodisch abwechselnd zur Lieferung eines Datenwortes für einen Zeitpunkt einer Steuersignaländerung und eines Datenwortes für Steuersignale vorgesehen, die abwechselnd unter jeweils zu inkrementierenden oder zu dekrementierenden Adressen im Speicher gespeichert sind. Zwei verschiedene Datenworte bilden jeweils ein Datenwortpaar (Tupel), das ein Ereignis komplett beschreibt. Die getrennte Speicherung ermöglicht ein einfaches Lesen und Weiterverarbeiten der Datenworte. Jedoch ist auch eine Speicherung als ein, möglicherweise verschlüsseltes, Datenwort mit einer späteren Aufteilung denkbar. Des weiteren erlaubt die Speicherung unter fortlaufenden Adressen eine Realisierung mit reduziertem Hardwareaufwand.

In einer Weiterbildung ist ein mit dem Speicher gekoppeltes Speicherregister jeweils zur Speicherung des im Speicher unter der nächsten Adresse gespeicherten Datenwortes vorgesehen. Durch die automatische Zwischenspeicherung des jeweils nächsten Datenwortes in einem Speicherregister wird der Speicherzugriff in zwei Phasen aufgeteilt. Bei einem Zugriff auf das Speicherregister muß nicht adressiert werden, so daß ein schnellerer Ablauf möglich ist. Dazu kann das Laden des Speicherregisters durch Auslesen einer bestimmten Adresse im Speicher separat gesteuert werden, so daß insbesondere der Speicher nicht direkt im Steuersignalgenerator integriert sein muß.

Vorteilhafterweise ist das Speicherregister periodisch bei einem ersten Zugriff zur Lieferung eines Datenwortes für einen Zeitpunkt einer Steuersignaländerung an ein Zeitregister und bei einem zweiten Zugriff zur Lieferung eines Datenwortes für Steuersignale an ein Steuersignalregister vorgesehen. Die festgelegte Reihenfolge ermöglicht ein sukzessives Auslesen des Speichers bei geringem Aufwand.

Vorteilhafte Ausgestaltungen der Erfindung sind in den weiteren Ansprüchen angegeben.

Die Aufgabe wird weiterhin durch einen Steuersignalgenerator sowie durch ein digitales Übertragungssystem mit einem Steuersignalgenerator gelöst, in dem der Speicher zur Lieferung von Datenworten vorgesehen ist, die jeweils Steuersignale für wenigstens zwei mit dem Steuersignalgenerator gekoppelte Steuerleitungen enthalten.

Im folgenden soll ein Ausführungsbeispiel der Erfindung anhand von Zeichnungen näher erläutert werden. Dabei zeigen
- Figur 1:: ein Blockschaltbild eines digitalen Signalprozessors (DSP) und eines Steuersignalgenerators in einem Mobilfunkgerät,
- Figur 2:: ein detailliertes Blockschaltbild des Steuersignalgenerators und
- Figur 3:: ein Diagramm mit zeitlichen Verläufen von Steuersignalen.

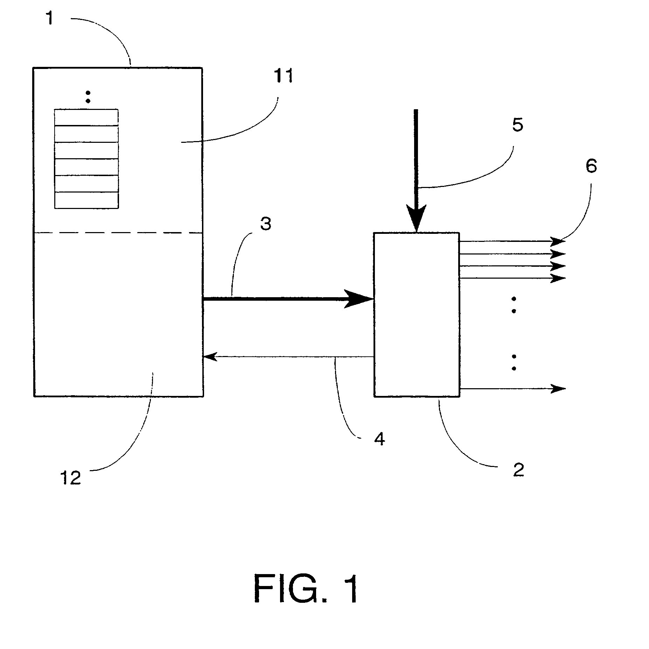

In der Figur 1 ist ein digitaler Signalprozessor (DSP) 1 mit einem Speicher 11 und einem Prozessorkern 12 sowie ein Steuersignalgenerator 2 eines Mobilfunkgerätes dargestellt. Der DSP 1 ist über eine Datenleitung 3 und eine Interruptleitung 4 mit dem Steuersignalgenerator 2 verbunden. Weiterhin ist ein periodischer Zeitgeber gekoppelt, der ein Zeitsignal 5 liefert. Der periodische Zeitgeber ist als Zähler realisiert, der mittels des Systemtaktes inkrementiert wird und seinen Zählerstand 5 an den Steuersignalgenerator 2 liefert. Der Steuersignalgenerator 2 stellt an seinen Ausgängen Steuersignale 6 für angeschlossene Baugruppen des Mobilfunkgerätes zur Verfügung, die nicht dargestellt sind.

Im Speicher 11, der bei dieser Ausführungsform im DSP 1 integriert ist, ist periodisch abwechselnd ein Datenwort für einen Zeitpunkt einer Steuersignaländerung und ein Datenwort für Steuersignale 6 gespeichert. Dabei bilden jeweils ein Zeitpunkt und eine Steuersignaländerung ein Datenwortpaar. Die Datenworte sind fortlaufend adressiert, so daß die Adresse zum Auslesen der Datenworte ausgehend vom Datenwort für den ersten gespeicherten Zeitpunkt jeweils lediglich inkrementiert werden muß. Die Datenworte werden über die Datenleitung 3 an den Steuersignalgenerator 2 geliefert, der im Gegenzug über die Interruptleitung 4 das Auslesen des folgenden Datenwortpaares initialisiert.

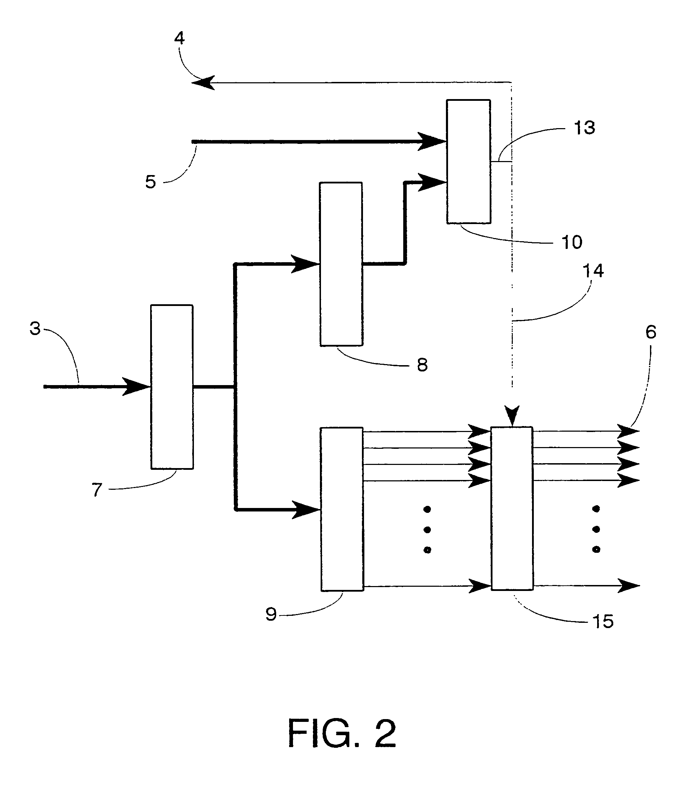

In der Figur 2 ist der Steuersignalgenerator 2 detaillierter dargestellt. über die Datenleitung 3 gelangen die Datenworte in ein Speicherregister 7, in dem sie zwischengespeichert werden. Der Interrupt auf der Interruptleitung 4 startet im Prozessorkern 12 eine Interruptroutine, die neben dem Auslesen des folgenden Datenwortpaares aus dem Speicher 11 auch einen ersten und einen zweiten Zugriff auf das Speicherregister 7 erlaubt. Beim ersten Zugriff wird das Datenwort für den Zeitpunkt der nächsten Steuersignaländerung vom Speicherregister 7 in ein Zeitregister 8 und beim zweiten Zugriff das Datenwort für die Steuersignale 6 in ein Steuersignalregister 9 geladen. Ein Vergleicher 10 vergleicht den Inhalt des Zeitregisters 8 mit dem Zählerstand 5 und liefert bei Übereinstimmung ein Übereinstimmungssignal 13. Aus diesem Grund wird der Zeitpunkt für eine Steuersignaländerung in Relation zu dem periodischen Zeitgeber ermittelt und als Datenwort abgespeichert. Wenn als periodischer Zeitgeber ein Zähler verwendet wird, ist der kleinste zeitliche Abstand zwischen zwei Steuersignaländerungen nur durch die Frequenz des Taktes begrenzt, mit dem der Zähler inkrementiert wird.

Aufgrund des Übereinstimmungssignals 13 wird ein Interrupt 4 an den Prozessorkern 12 und ein Lesesignal 14 an ein Ausgangsregister 15 geliefert. Das Ausgangsregister 15 ist mit dem Steuersignalregister 9 gekoppelt und lädt bei Empfang des Lesesignals 14 die Steuersignale 6. Da an das Ausgangsregister 15 die Steuerleitungen direkt angeschlossen sind, werden so zum gespeicherten Zeitpunkt die zugehörigen Steuersignale 6 geliefert. Gleichzeitig wird mittels des Interrupts 4 das folgende Datenwortpaar aus dem Speicher 11 geladen. Das Speicherregister 7 wird dabei nur zur Zwischenspeicherung eines Datenwortes benutzt, wodurch Zeitregister 8 und Steuersignalregister 9 jeweils mit dem entsprechenden Datenwort geladen werden können, ohne den Speicher 11 adressieren zu müssen.

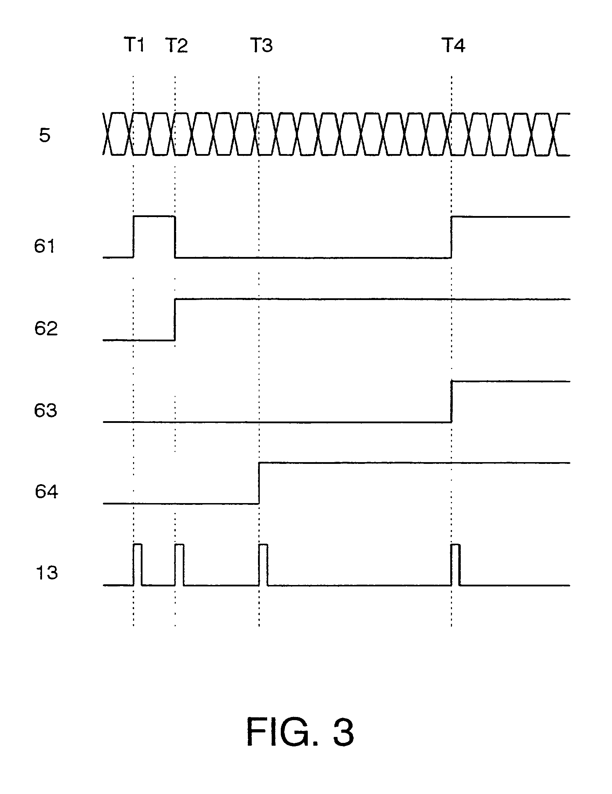

Die Figur 3 zeigt den zeitlichen Verlauf von vier Steuersignalen 61, 62, 63 und 64. In der oberen Reihe ist der Verlauf des periodischen Zeitgebers 5 und darunter die vier Steuersignale 61 bis 64. Die Kurve 13 zeigt das Übereinstimmungssignal 13, das jeweils einen Interrupt 4 und ein Lesesignal 14 auslöst. Die vier markierten Zeitpunkte T1, T2, T3 und T4 kennzeichnen jeweils einen Zeitpunkt, an dem ein Steuersignal geändert werden soll. Zu diesen Zeitpunkten stimmt der Stand des durch das Zeitsignal 5 inkrementierten Zählers mit einem abgespeicherten Zeitpunkt für eine Steuersignaländerung überein.

Die Tabelle zeigt den im Speicher 11 abgespeicherten Datensatz, der den in Figur 3 dargestellten Verlauf erzeugt. Unter der ersten Adresse n wird ein Datenwort für den ersten Zeitpunkt T1 einer Steuersignaländerung abgespeichert. Unter der um 1 erhöhten Adresse n + 1 ist ein Datenwort für alle ab diesem Zeitpunkt T1 einzunehmenden Steuersignale 61-64 abgelegt. Weitere Datenwortpaare folgen unter fortlaufenden Adressen, wobei ein Hexadezimalcode verwendet wird.

| Adresse | Daten |
|---|---|
| n | 0x2FF1 / T1 |
| n+ 1 | 0x0001 |
| n+2 | 0x2FF3 / T2 |
| n+3 | 0x0002 |
| n+4 | 0x2FF7 / T3 |
| n+5 | 0x000A |
| n+6 | 0x3000 / T4 |
| n+7 | 0x000F |

Zum Zeitpunkt T1 ist der Zählerstand 0x2FF1, so daß der Vergleicher 10 die Übereinstimmung mit dem Datenwort im Zeitregister 8 feststellt. Daher wird aufgrund des Lesesignals 14 das Datenwort 0x0001 als binärer Wert aus dem Steuersignalregister 9 in das Ausgangsregister 15 geladen. Damit werden die vier Steuersignale 61-64 an die angeschlossenen Steuerleitungen geliefert. Das bedeutet, daß das Steuersignal 61 (entspricht für den binären Wert dem LSB) den Wert '1' erhält und die anderen 62-64 auf den Wert '0' gesetzt werden bzw. bleiben. Gleichzeitig wird wegen des Interrupt 4 ein erster und zweiter Zugriff auf das Speicherregister 7 initiiert. In das Speicherregister 7 wird automatisch immer das an der nächsten Adresse gespeicherte Datenwort zwischengespeichert, um das Auslesen aus dem Speicher 11 zu vereinfachen. Bei einem Interrupt 4 wird zweimal darauf zugegriffen und der Inhalt beim ersten Zugriff in das Zeitregister 8 und beim zweiten Zugriff in das Steuersignalregister übertragen. Sobald der Zählerstand 5 den nun im Zeitregister 8 gespeicherten Zeitpunkt T2 für die nächste Steuersignaländerung erreicht, wird vom Vergleicher 10 das nächste Übereinstimmungssignal 13 erzeugt und der Ablauf wiederholt sich.

## Patentansprüche

1. Mobilfunkgerät mit mehreren, durch Steuersignale (6) schaltbaren Baugruppen, mit wenigstens einem über Steuerleitungen gekoppelten Steuersignalgenerator (2) und mit wenigstens einem Speicher (11) zur Speicherung von wenigstens einem Datenwort für ein Steuersignal (6),
**dadurch gekennzeichnet,**
**daß** jeder Speicher (11) zur Lieferung von Datenworten vorgesehen ist, wobei jedes Datenwort jeweils Steuersignale (6) für wenigstens zwei mit dem Steuersignalgenerator (2) gekoppelte Steuerleitungen enthält.

2. Mobilfunkgerät nach Anspruch 1,
**dadurch gekennzeichnet,**
**daß** der Speicher (11) periodisch abwechselnd zur Lieferung eines Datenwortes für einen Zeitpunkt einer Steuersignaländerung und eines Datenwortes für Steuersignale (6) vorgesehen ist, die abwechselnd unter jeweils zu inkrementierenden oder zu dekrementierenden Adressen im Speicher (11) gespeichert sind.

3. Mobilfunkgerät nach Anspruch 2,
**dadurch gekennzeichnet,**
**daß** ein mit dem Speicher (11) gekoppeltes Speicherregister (7) jeweils zur Speicherung des im Speicher (11) unter der nächsten Adresse gespeicherten Datenwortes vorgesehen ist.

4. Mobilfunkgerät nach Anspruch 3,
**dadurch gekennzeichnet,**
**daß** das Speicherregister (7) periodisch
- bei einem ersten Zugriff zur Lieferung eines Datenwortes für einen Zeitpunkt einer Steuersignaländerung an ein Zeitregister (8) und
- bei einem zweiten Zugriff zur Lieferung eines Datenwortes für Steuersignale (6) an ein Steuersignalregister (9) vorgesehen ist.

5. Mobilfunkgerät nach Anspruch 4,
**dadurch gekennzeichnet,**
**daß** ein Vergleicher (10) bei Übereinstimmung des Zeitregisters (8) mit einem Zeitsignal (5) eines periodischen Zeitgebers zur Lieferung eines Übereinstimmungssignals (13) vorgesehen ist.

6. Mobilfunkgerät nach Anspruch 5,
**dadurch gekennzeichnet,**
**daß** ein mit den Steuerleitungen gekoppeltes Ausgangsregister (15) bei Empfang des Übereinstimmungssignals (13) zum Laden der Steuersignale (6) vom Steuersignalregister (9) vorgesehen ist,
und **daß** eine Verarbeitungseinheit (12) bei Empfang des Übereinstimmungssignals (13) zur Aktivierung eines ersten und eines zweiten Zugriffs auf das Speicherregister (7) vorgesehen ist.

7. Steuersignalgenerator (2) zur Schaltung wenigstens einer über eine Steuerleitung gekoppelten Baugruppe mittels eines Steuersignals (6) mit wenigstens einem Speicher (11) zur Speicherung von wenigstens einem Datenwort für ein Steuersignal (6),
**dadurch gekennzeichnet,**
**daß** der Speicher (11) zur Lieferung von Datenworten vorgesehen ist, die jeweils Steuersignale (6) für wenigstens zwei mit dem Steuersignalgenerator (2) gekoppelte Steuerleitungen enthalten.

8. Digitales Übertragungssystem mit einem Steuersignalgenerator (2) zur Schaltung wenigstens einer über eine Steuerleitung gekoppelten Baugruppe mittels eines Steuersignals (6) mit wenigstens einem Speicher (11) zur Speicherung von wenigstens einem Datenwort für ein Steuersignal (6),
**dadurch gekennzeichnet,**
**daß** der Speicher (11) zur Lieferung von Datenworten vorgesehen ist, die jeweils Steuersignale (6) für wenigstens zwei mit dem Steuersignalgenerator (2) gekoppelte Steuerleitungen enthalten.

## Claims

1. A mobile radio telephone comprising a plurality of modules connectable by control signals (6), at least one control signal generator (2) coupled by control lines, and at least one memory (11) for storing at least one data word for one control signal (6), **characterized in that** each memory (11) is provided for supplying data words containing each respective control signals (6) for at least two control lines coupled to the control signal generator (2).

2. A mobile radio telephone as claimed in claim 1, **characterized in that** the memory (11) periodically alternately supplies a data word for an instant of a control signal change and a data word for control signals (6) which have alternately been stored at addresses in the memory (11) which are to be incremented or decremented.

3. A mobile radio telephone as claimed in claim 2, **characterized in that** a memory register (7) coupled to the memory (11) stores the data word that is stored at the next address in the memory (11).

4. A mobile radio telephone as claimed in claim 3, **characterized in that** the memory register (7) periodically supplies
- when accessed for the first time, a data word for an instant of a control signal change to a time register (8) and
- when accessed for the second time applies a data word for control signals (6) to a control signal register (9).

5. A mobile radio telephone as claimed in claim 4, **characterized in that** when the time register (8) matches a timing signal (5) of a periodic timer a comparator (10) supplies a match signal (13).

6. A mobile radio telephone as claimed in claim 5, **characterized in that** an output register (15) coupled to the control lines unloads the control signals (6) from the control signal register (9) when the match signal (13) is received and **in that** a processing unit (12) activates a first and a second access to the memory register (7) when the match signal (13) is received.

7. A control signal generator (2) for connecting by means of a control signal (6) at least one module coupled by a control line to at least one memory (11) for storing at least one data word for one control signal (6), **characterized in that** the memory (11) supplies data words containing respective control signals (6) for at least two control lines coupled to the control signal generator (2).

8. A digital transmission system with a control signal generator (2) for connecting by means of a control signal (6) at least one module coupled by a control line to at least one memory (11) for storing at least one data word for one control signal (6), **characterized in that** the memory (11) supplies data words containing respective control signals (6) for at least two control lines coupled to the control signal generator (2).

## Revendications

1. Appareil de radiotéléphonie mobile comprenant plusieurs modules électroniques commutables par des signaux de commande (6), au moins un générateur de signaux de commande (2) couplé via des lignes de commande et au moins une unité de mémoire (11) pour la mémorisation d'au moins un mot de données destiné à recevoir un signal de commande (6), **caractérisé en ce que** chaque unité de mémoire (11) est prévue pour la fourniture de mots de données, où chaque mot de données contient des signaux de commande (6) pour au moins deux lignes de commande couplées au générateur de signaux de commande (2).

2. Appareil de radiotéléphonie mobile selon la revendication 1, **caractérisé en ce que** l'unité de mémoire (11) est prévue pour fournir, en alternance périodique, un mot de données destiné à recevoir une indication temporelle d'une modification de signal de commande et un mot de données destiné à recevoir des signaux de commande (6), mots qui sont mémorisés dans l'unité de mémoire (11) à des adresses respectivement à incrémenter ou à décrémenter, en alternance.

3. Appareil de radiotéléphonie mobile selon la revendication 2, **caractérisé en ce que** un registre de mémoire (7) couplé à l'unité de mémoire (11) est prévu pour mémoriser, chaque fois, le mot de données mémorisé dans l'unité de mémoire (11) à l'adresse suivante.

4. Appareil de radiotéléphonie mobile selon la revendication 3, **caractérisé en ce que** le registre de mémoire (7) est prévu pour, périodiquement,
- lors d'un premier accès, délivrer à un registre d'horloge (8) un mot de données destiné à recevoir une indication temporelle d'une modification de signal de commande et
- lors d'un second accès, délivrer à un registre de signaux de commande (9) un mot de données destiné à recevoir des signaux de commande (6).

5. Appareil de radiotéléphonie mobile selon la revendication 4, **caractérisé en ce que** un comparateur (10) est prévu pour délivrer un signal de concordance (13) en cas de concordance du registre d'horloge (8) avec un signal d'indication temporelle (5) d'une horloge périodique.

6. Appareil de radiotéléphonie mobile selon la revendication 5, **caractérisé en ce que** un registre de sortie (15) couplé aux lignes de commande est prévu pour charger les signaux de commande (6) à partir du registre de signaux de commande (9) lors de la réception du signal de concordance (13),
et **en ce qu'**une unité de traitement (12) est prévue pour activer un premier et un second accès au registre de mémoire (7) lors de la réception du signal de concordance (13).

7. Générateur de signaux de commande (2) destiné à la commutation, au moyen d'un signal de commande (6), d'au moins un module électronique couplé via une ligne de commande, générateur comprenant au moins une unité de mémoire (11) pour la mémorisation d'au moins un mot de données destiné à recevoir un signal de commande (6), **caractérisé en ce que** l'unité de mémoire (11) est prévue pour la mémorisation de mots de données qui contiennent chaque fois des signaux de commande (6) destinés à au moins deux lignes de commande couplées au générateur de signaux de commande (2).

8. Système de transmission numérique comprenant un générateur de signaux de commande (2) destiné à la commutation, au moyen d'un signal de commande (6), d'au moins un module électronique couplé via une ligne de commande, générateur comprenant au moins une unité de mémoire (11) pour la mémorisation d'au moins un mot de données destiné à recevoir un signal de commande (6), **caractérisé en ce que** l'unité de mémoire (11) est prévue pour la mémorisation de mots de données qui contiennent chaque fois des signaux de commande (6) destinés à au moins deux lignes de commande couplées au générateur de signaux de commande (2).
